(19) Europäisches Patentamt

European Patent Office

Office européen des brevets

(11) **EP 4 722 782 A1**

(12) **EUROPEAN PATENT APPLICATION**
published in accordance with Art. 153(4) EPC

(43) Date of publication:
**08.04.2026 Bulletin 2026/15**

(21) Application number: **23939244.2**

(22) Date of filing: **30.10.2023**

(51) International Patent Classification (IPC):
**G02B 13/18** (2006.01)     **G02B 27/01** (2006.01)

(86) International application number:
**PCT/CN2023/127643**

(87) International publication number:
**WO 2024/244273 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2023   CN 202310640567**

(71) Applicant: **Goertek Optoelectronics Technology (Qingdao) Co., Ltd.**
**Qingdao, Shandong 266100 (CN)**

(72) Inventor: **SHI, Chaiyuan**
**Qingdao, Shandong 266100 (CN)**

(74) Representative: **ABG Intellectual Property Law, S.L.**
**Avenida de Burgos, 16D**
**Edificio Euromor**
**28036 Madrid (ES)**

(54) **OPTICAL MODULE AND HEAD-MOUNTED DISPLAY DEVICE**

(57)     Provided in the embodiments of the present application are an optical module and a head-mounted display device. The optical module comprises: a lens group; and a light-splitting element, a first phase retarder and a polarizing reflection element, which are arranged between optical paths of the lens group, wherein the first phase retarder is located between the light-splitting element and the polarizing reflection element. The optical module further comprises a display screen, which is located on one side of the lens group. The lens group comprises a first lens and a second lens, wherein the first lens is close to the display screen; the second lens is located on the side of the first lens away from the display screen; and the outer diameter D3 of the first lens, the outer diameter D4 of the second lens and the aperture D1 of a light-emitting face of the display screen satisfy: $1 \leq (D1+D4)/D3 \leq 3$. The optical module provided in the embodiments of the present application has a small size, and can also have a large angle of view.

Fig. 2

## Description

### Technical Field

The embodiment of the present application relates to a technical field of optical imaging, and more particularly, to an optical module and a head-mounted display device.

### Description of Related Art

A core component of the virtual reality technology is an optical system disposed therein, and the effect of the displayed image directly determines the quality of virtual reality products. The smaller the size of the display of the virtual reality display product, the higher the resolution, and the higher the requirement on the optical system, especially the field of view. However, it is generally difficult to achieve a large field of view for the optical system of the display with a small size.

### SUMMARY

An object of the present application is to provide a new technical solution of an optical module and a head-mounted display device, which solves the problem that it is generally difficult to achieve a large field of view for the optical module of the display with a small size in the prior art.

According to a first aspect, the present application provides an optical module. The optical module includes a lens group, and a light-splitting element, a first phase retarder and a polarizing reflection element arranged in an optical path of the lens group, wherein the first phase retarder is located between the light-splitting element and the polarizing reflection element.

The optical module further includes a display screen, and the display screen is located on a side of the lens group.

The lens group includes a first lens and a second lens, the first lens is close to the display screen, and the second lens is located on a side of the first lens away from the display screen.

An outer diameter D3 of the first lens, an outer diameter D4 of the second lens and an aperture D1 of a light-emitting surface of the display screen satisfy: $1 \leq (D1+D4)/D3 \leq 3$.

Optionally, the lens group further includes a third lens, the third lens is located on a side of the second lens away from the display screen, and the first lens, the second lens and the third lens are located on an optical axis, and refractive powers of the first lens, the second lens and the third lens are positive.

Optionally, a distance between a surface of the third lens close to the display screen and a light-emitting surface of the display screen is L, a distance between the surface of the third lens close to the display screen and a surface of the first lens away from the display screen is L1, and the optical module satisfies:

$$-500 \leq D1*L1-D3*L < 0.$$

Optionally, a refractive power of the optical module is $\varphi$, a refractive power of the second lens is $\varphi 2$, and the optical module satisfies:

$$0 < D1*\varphi - D4*\varphi_2 \leq 2.$$

Optionally, a refractive power $\varphi_1$ of the first lens satisfies: $0 \leq \varphi_1 < 0.01$;

the refractive power $\varphi_2$ of the second lens satisfies: $0 < \varphi_2 < 0.1$; and

a refractive power $\varphi_3$ of the third lens satisfies: $0 < \varphi_3 < 0.1$.

Optionally, a combined refractive power $\varphi_4$ of the second lens and the third lens satisfies: $0.03 \leq \varphi_4 \leq 0.07$.
Optionally, a combined refractive power $\varphi_5$ of the first lens, the second lens and the third lens satisfies: $0.02 \leq \varphi_5 \leq 0.08$.
Optionally, the optical module further includes a first polarization element, and the first phase retarder, the polarizing reflection element, and the first polarization element are sequentially stacked to form a composite film; and wherein the light-splitting element is disposed on the second lens, and the composite film is disposed on the third lens.
Optionally, the display screen is configured to emit a circularly polarized light or a natural light; and

when a light emitted by the display screen is the natural light, a laminating element is disposed on either side of the first lens to convert the natural light into circularly polarized light, wherein the laminating element includes a second phase retarder, a second polarization element and a third phase retarder that are stacked, and wherein the second polarization element is located between the second phase retarder and the third phase retarder.

Optionally, the laminating element is disposed on a surface of the first lens away from the display screen, the light-splitting element is disposed on a surface of the second lens close to the display screen, and the composite film is disposed on a surface of the third lens close to the display screen.

Optionally, an effective focal length of the optical module is F, a center thickness of the first lens is $T_1$, and the optical module satisfies:

$$0 < (F-T_1)/D1 \leq 1.5.$$

Optionally, an effective focal length F of the optical module satisfies:$15mm \leq F \leq 30mm$.

Optionally, a field of view (FOV) of the optical module is no less than 95°.

According to a second aspect, the present application provides a head-mounted display device. The head-mounted display device includes:

a housing; and

the optical module according to the first aspect.

A technical effect of the present application is as below:

The optical module provided in the embodiments of the present application has a folded optical path structure, and by designing a size relationship among outer diameters of two lenses of the optical module on a side close to the display screen and an aperture of the display screen, the optical module can have a large field of view (FOV) while using a display screen with a small size.

Other features and advantages of the present disclosure will become apparent from the following detailed description of exemplary embodiments of the present disclosure with reference to the accompanying drawings.

## BRIEF DESCRIPTION OF DRAWINGS

The drawings, which are incorporated in and constitute a part of the specification, illustrate embodiments of the specification and, together with the description, serve to explain the principles of the specification.

FIG. 1 is a schematic structural diagram of an optical module according to an embodiment of present disclosure;

FIG. 2 is a schematic diagram of a size relationship between a first lens, a second lens, and a display screen according to an embodiment of present disclosure;

FIG. 3 is a schematic diagram of a composite film disposed on the third lens according to an embodiment of present disclosure;

FIG. 4 is a schematic diagram of a laminating element disposed on the first lens according to an embodiment of present disclosure;

FIG. 5 is a spot diagram of the optical module shown in FIG. 1;

FIG. 6 is a MTF curve diagram of the optical module shown in FIG. 1;

FIG. 7 is a field curvature distortion diagram of the optical module shown in FIG. 1;

FIG. 8 is a vertical chromatic aberration diagram of the optical module shown in FIG. 1;

FIG. 9 is another schematic structural diagram of an optical module according to an embodiment of present disclosure;

FIG. 10 is a spot diagram of the optical module shown in FIG. 9;

FIG. 11 is a MTF curve diagram of the optical module shown in FIG. 9;

FIG. 12 is a field curvature distortion diagram of the optical module shown in FIG. 9;

FIG. 13 is a vertical chromatic aberration diagram of the optical module shown in FIG. 9;

FIG. 14 is still another schematic structural diagram of an optical module according to an embodiment of present disclosure;

FIG. 15 is a spot diagram of the optical module shown in FIG. 14;

FIG. 16 is a MTF curve diagram of the optical module shown in FIG. 14;

FIG. 17 is a field curvature distortion diagram of the optical module shown in FIG. 14; and

FIG. 18 is a vertical chromatic aberration diagram of the optical module shown in FIG. 14.

Reference numerals in the drawings are follows:
1: display screen; 2: screen protective glass; 3: first lens; 31: first surface; 32: second surface; 4: second lens; 41: third surface; 42: fourth surface; 5: third lens; 51: fifth surface; 52: sixth surface; 6: laminating element; 61: second phase retarder; 62: second polarization element; 63: third phase retarder; 64: second anti-reflection film; 7: light-splitting element; 8: composite film; 80: first anti-reflection film; 81: first phase retarder; 82: polarizing reflection element; 83: first polarization element; 01: human eye.

## DETAILED DESCRIPTIONS

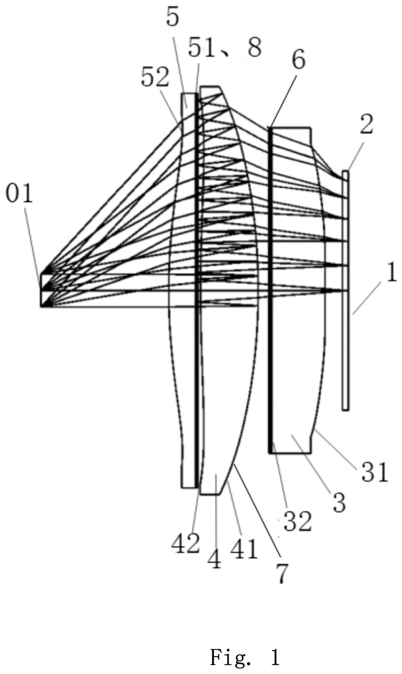

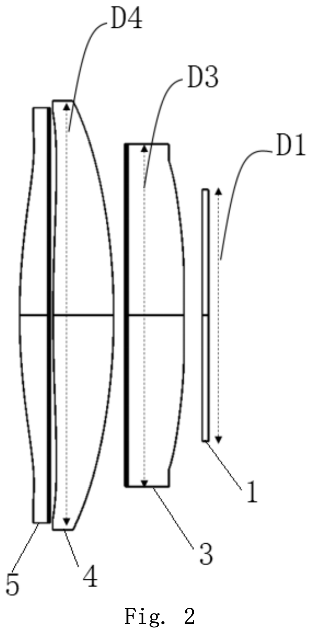

Various exemplary embodiments of the present application will now be described in detail with reference to the accompanying drawings. It should be noted that the relative arrangement of components and steps, numerical expressions and numerical values set forth in these embodiments do not limit the scope of the present application, unless specifically stated otherwise.
The following description of at least one exemplary embodiment is merely illustrative in nature and is in no way intended to limit the present disclosure, its application, or uses.
Techniques and devices known to those of ordinary skill in the relevant art may not be discussed in detail, but where appropriate, the techniques and devices should be considered part of the specification.
In all of the examples shown and discussed herein, any particular value should be interpreted as illustrative only, and not as a limitation. Accordingly, other examples of exemplary embodiments may have different values.
It should be noted that similar reference numerals and letters indicate similar items in the following drawings, and therefore, once an item is defined in one drawing, it does not need to be further discussed in subsequent drawings.
The following describes an optical module and a head-mounted display device provided in embodiments of present disclosure in detail with reference to the drawings.
According to an aspect of the embodiments of present disclosure, an optical module is provided, and the optical module may be applicable to a wearable device. The wearable device is, for example, a head mounted display (HMD) such as a VR head-mounted display device. The VR head-mounted display device includes, for example, VR smart glasses or a VR smart helmet, which is not limited in the embodiments of the present disclosure.
Referring to FIG. 1 to FIG. 4, an optical module provided in an embodiment of present disclosure includes a lens group; and a light-splitting element 7, a first phase retarder 81 and a polarizing reflection element 82 arranged in an optical path of the lens group, wherein the first phase retarder 81 is located between the light-splitting element 7 and the polarizing reflection element 82. The optical module further includes a display screen 1, and the display screen 1 is located on one side of the lens group. The lens group includes a first lens 3 and a second lens 4, the first lens 3 is arranged close to the display screen 1, and the second lens 4 is located on a side of the first lens 3 away from the display screen 1; and an outer diameter D3 of the first lens 3, an outer diameter D4 of the second lens 4, and an aperture D1 of a light-emitting surface of the display screen 1 satisfy: $1 \leq (D1+D4)/D3 \leq 3$.
The optical module provided according to the above embodiments of the present application is an optical module based on a folded optical path (pancake), and the optical module can be applied to virtual reality products such as VR products.
Referring to FIG. 1 and FIG. 2, the optical module provided by the above embodiments of the present application is provided with a first lens 3 and a second lens 4 on a side close to the display screen 1, which are sequentially arranged along an optical axis, and the display screen 1 is arranged on a side of the first lens 3 away from the second lens 4. In the optical scheme of the present embodiment, by obtaining a relationship that the outer diameter D3 of the first lens 3, the outer diameter D4 of the second lens 4, and the aperture D1 of the display screen 1 satisfy 1 ≤(D1+D4)/D3≤ 3 through a completely new design of parameters, the optical module can have a large field of view (FOV) while using a display screen 1 with a small size.

For example, when (D1+D4)/D3 is 1, the optical module can adapt to a 0.94 inches display screen while ensuring that the field of view is ≥ 95 degrees.

For example, when (D1+D4)/D3 is 1.9, the optical module can adapt to a 1.3 inches display screen while ensuring that the field of view is ≥ 95 degrees.

For example, when (D1+D4)/D3 is 3, the optical module can adapt to a 2.1 inches display screen while ensuring that the field of view is ≥ 95 degrees.

It should be noted that when the value of (D1+D4)/D3 is less than 1 or greater than 3, the FOV of the formed optical module under the small-size display screen is small and cannot reach 95 degrees.

The optical module provided in the embodiment of present disclosure may use a small display screen 1. For example, a size of the display screen 1 may be not greater than 2.1 inches, which can reduce a weight and production costs of the optical module. In order to solve the problem of limited field of view of the optical module caused by the small-size display screen, sizes of the two lenses close to the display screen 1 are designed and adjusted, so that the sizes of the two lenses and the display screen 1 satisfy a specific proportional relationship, and thus the optical module can have the performance of a large field of view, and the field of view (FOV) of the optical module can reach, for example, 95° or more.

The optical module provided in the embodiment of present disclosure is conducive to implementing a large field of view requirement of a virtual reality display device such as a VR device on a small display screen. Based on the small-size design of the display screen, the weight of the optical module can be reduced, which is more suitable for users to wear and use, and can improve the wearing comfort without fatigue even if it is used for a long time.

The optical module provided in the embodiment of present disclosure is a folded optical path structure, and by adjusting a size relationship among outer diameters of two lenses of the optical module on a side close to the display screen 1 and an aperture of the display screen 1, the optical module can have a large field of view FOV while using a display screen with a small size, thereby improving immersive experience of a user.

The optical module provided in the embodiment of present disclosure is a folded optical path, and in addition to the lens group, the optical module further includes optical elements such as a light-splitting element 7, a first phase retarder 81, and a polarizing reflection element 82 that are configured to form the folded optical path. The above-mentioned optical elements (optical films) can be used to form a folded optical path between the lenses of the lens group, so that light can be refracted therein, which can extend a propagation path of the light, is conducive to the final clear imaging, and also conducive to reducing the volume of the entire optical module.

According to the optical module provided in the embodiment of present disclosure, the first lens 3 is a first lens close to the display screen 1, the second lens 4 is a second lens close to the display screen 1, outer diameters of the two lenses are related to an aperture of the display screen 1, and by adjusting a size relationship among the outer diameters of the two lenses and the aperture of the display screen 1, it can be ensured that even if the display screen 1 is in a small size, the entire formed optical module can have a relatively large field of view.

It should be noted that the lens group may further include other lenses. For the lens group, the number of lenses used may be flexibly adjusted according to specific needs. As the number of lenses used in the folded optical path increases, the imaging quality of the optical module can be improved, but the size along the optical axis direction (transverse direction) and production cost of the optical module will also be affected, resulting in a larger volume, an increased weight and an increased cost of the optical module.

As a preferred implementation of the present application, two lenses may be arranged on a side of the lens group close to the display screen 1, as shown in FIG. 1.

The light-splitting element 7 is, for example, a transflective film. The light-splitting element 7 may transmit a part of light and reflect another part of light.

Optionally, the light-splitting element 7 has a reflectivity of 47% to 53%.

It should be noted that the reflectivity and transmittance of the light-splitting element 7 may be flexibly adjusted according to specific needs, which is not limited in the embodiments of the present disclosure.

The first phase retarder 81 is, for example, a quarter-wave plate. Of course, the first phase retarder 81 herein may also be set as other phase retarders such as a half-wave plate as required.

According to the optical module provided in the embodiment of present disclosure, in the folded optical path on a side close to the human eye 01, the first phase retarder 81 may be disposed to change a polarization state of light. For example, the first phase retarder 81 may be used to convert linearly polarized light into circularly polarized light, or convert circularly polarized light into linearly polarized light.

The polarizing reflection element 82 is, for example, a polarizing reflection film/sheet. The polarizing reflection element 82 is a polarization reflector that reflects horizontal linearly polarized light and transmits vertical linearly polarized light, or a polarization reflector that reflects linearly polarized light at any other specific angle and transmits linearly polarized light perpendicular to the angle.

In the embodiment of present disclosure, the first phase retarder 81 and the polarizing reflection element 82 cooperate with each other, and can be configured to parse light and transmit the light.

It should be emphasized that the optical elements such as the light-splitting element 7, the first phase retarder 81, and the polarizing reflection element 82 may form a folded optical path in the lens group near the side of the human eye 01, and the arrangement positions of these optical elements are relatively flexible, but it should be ensured that the first phase retarder 81 is located between the light-splitting element 7 and the polarizing reflection element 82.

In some examples of the present disclosure, referring to FIG. 1, the lens group further includes a third lens 5, the third lens 5 is located on a side of the second lens 4 away from the display screen 1, the first lens 3, the second lens 4, and the third lens 5 are located on an optical axis, and refractive powers of the first lens 3, the second lens 4, and the third lens 5 are positive.

According to the above examples, the lens group has three lenses, and the refractive powers of the three lenses are all designed to be positive, which is advantageous for correcting the aberration of the optical module, thereby improving the imaging quality and making the optical module have good optical performance.

In some examples of the present disclosure, referring to FIG. 1, a distance between a surface of the third lens 5 close to the display screen 1 and a light-emitting surface of the display screen 1 is L, a distance between the surface of the third lens 5 close to the display screen 1 and a surface of the first lens 3 away from the display screen 1 is L1, and the optical module satisfies: $-500 \leq D1*L1-D3*L< 0$.

The third lens 5 is located on the side away from the display screen 1, and includes two surfaces. Referring to FIG. 1, a surface of the third lens 5 close to the display screen 1 is a fifth surface 51, and a surface of the third lens 5 away from the display screen 1 is a sixth surface 52.

The first lens 3 is located on the side close to the display screen 1, and includes two surfaces. Referring to FIG. 1, a surface of the first lens 3 close to the display screen 1 is a first surface 31, and a surface of the first lens 3 away from the display screen 1 is a second surface 32.

In the above example, L is the distance from the fifth surface 51 of the third lens 5 to the light-emitting surface of the display screen 1, L1 is the distance from the fifth surface 51 of the third lens 5 to the second surface 32 of the first lens 3, and the two distances, the aperture D1 of the display screen 1 and the outer diameter D3 of the first lens 3 should satisfy the relationship $-500 \leq D1*L1-D3*L< 0$ in the above example, which can ensure that the optical module has a large field of view and allows the first lens 3 and the second lens 4 to have wider dimensional tolerances under the same performance requirements, and can reduce the assembly difficulty of the optical module.

In some examples of the present disclosure, a refractive power of the optical module is $\varphi$, a refractive power of the second lens 4 is $\varphi_2$, and the optical module satisfies: $0 <D1*\varphi-D4*\varphi_2\leq 2$.

According to the condition met by the optical module in the foregoing examples, a radial size of the optical module can be reduced while a large field of view is ensured, so that immersive experience of using the optical module by the user and comfort of wearing the optical module can be ensured.

In some examples of the present disclosure, a refractive power $\varphi_1$ of the first lens 3 satisfies: $0 \leq\varphi_1< 0.01$; a refractive power $\varphi_2$ of the second lens 4 satisfies: $0 <\varphi_2< 0.1$; and a refractive power $\varphi3$ of the third lens 5 satisfies: $0 <\varphi_3< 0.1$.

According to the above example, by respectively defining the refractive power ranges of the three lenses in the lens group, the three lenses, after being matched and combined, have a positive combined refractive power, which can better correct aberrations and improve imaging quality.

In some examples of the present disclosure, a combined refractive power $\varphi_4$ of the second lens 4 and the third lens 5 satisfies: $0.03 \leq\varphi_4\leq 0.07$.

According to the optical module provided in the embodiment of present disclosure, the lens group has three lenses, as shown in FIG. 1, namely a first lens 3 close to the display screen 1, a third lens 5 close to the human eye 01, and a second lens 4 between the first lens 3 and the third lens 5. According to the above example, the combined refractive power range of the second lens 4 and the third lens 5 is designed to be 0.03~0.07 as above, and on this basis, for a display screen with a fixed size, the field curvature and coma of the optical module are reduced in the case of increasing the field of view.

Optionally, a combined refractive power $\varphi_6$ of the first lens 3 and the second lens 4 satisfies: $0 <\varphi_6\leq 0.05$. The design of the scope of the combined refractive power of the first lens 3 and the second lens 4 can ensure a small field curvature at the edge field of the optical module.

In some examples of the present disclosure, a combined refractive power $\varphi_5$ of the first lens 3, the second lens 4, and the third lens 5 satisfies: $0.02 \leq\varphi_5\leq 0.08$.

According to the above examples, the design of the scope of the combined refractive power of the three lenses can well reduce aberrations of the optical module, and thus improve image quality and make the optical module have good optical performances.

In some examples of present disclosure, referring to FIG. 1, FIG. 3, and FIG. 4, the optical module further includes a first polarization element 83, and the first phase retarder 81, the polarizing reflection element 82 and the first polarization element 83 are sequentially stacked to form a composite film 8. The light-splitting element 7 is disposed on the second lens 4, and the composite film 8 is disposed on the third lens 5.

According to the above example, the light-splitting element 7 and the composite film 8 are both disposed in the lens group, and are separately disposed on the second lens 4 and the third lens 5, so that the optical module forms an optical architecture of a folded optical path, which is conducive to reduce the size of the optical module along the optical axis direction, thereby facilitating the lightweight design of the optical module. The optical elements forming the folded optical path, such as the light-splitting element 7 and the composite film 8, are directly disposed on different lenses, which is conducive to reducing the assembly difficulty of the optical module.

Certainly, the light-splitting element 7 and the composite film 8 may also be separately disposed on flat glass (a light-transmitting support member), and then arranged in an optical path as an independent device, which is not limited in the embodiment of present disclosure.

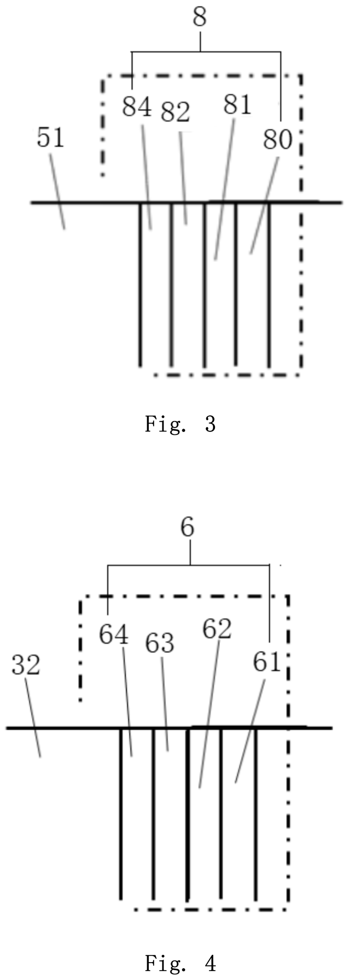

In some examples of the present application, referring to FIG. 1 and FIG. 4, the display screen 1 is configured to emit circularly polarized light or natural light; when the light emitted by the display screen 1 is natural light, a laminating element 6 is provided on either side of the first lens 3 to convert the natural light into circularly polarized light. Here, the laminating element 6 includes a second phase retarder 61, a second polarization element 62 and a third phase retarder 63 which are stacked; the second polarization element 62 is located between the second phase retarder 61 and the third phase retarder 63.

It should be noted that the incident light entering the lens group should be circularly polarized light.

When the display screen 1 emits natural light, the natural light needs to be first converted into a polarization state, so that the natural light is first converted into circularly polarized light and then enters the lens group on the left side, and finally the light emitted by the lens group enters the human eye 01 for imaging.

A device for converting natural light into circularly polarized light is the above-mentioned laminating element 6.

Specifically, the laminating element 6 includes, for example, a second phase retarder 61, a third phase retarder 63, and a second polarization element 62 disposed between the two phase retarders, as shown in FIG. 4. If the display screen 1 emits natural light, the natural light is still natural light after passing through the second phase retarder 61, becomes linearly polarized light after passing through the second polarization element 62, and then becomes circularly polarized light after passing through the third phase retarder 63.

Optionally, referring to FIG. 4, the laminating element 6 may further include a second anti-reflection film 64. In this case, the second anti-reflection film 64 is disposed on a side of the third phase retarder 63 away from the second polarization element 62. The anti-reflection film can reduce reflection, reduce reflection energy, and improve light efficiency.

The anti-reflection film may be formed on the lens by pasting or coating to form some interfaces, which can be used to increase transmittance and reduce reflectivity, thereby reducing image distortion and enabling the user to enjoy clearer image quality to reduce glare.

Optionally, referring to FIG. 1, a screen protection glass 2 may be disposed on a light-emitting surface of the display screen 1. The screen protection glass 2 can protect the display screen 1. In this case, the light emitted by the display screen 1 enters the laminating element 6 for polarization state conversion after being transmitted through the screen protection glass 2.

In some examples of the present application, referring to FIG. 1, the laminating element 6 is disposed on a surface of the first lens 3 away from the display screen 1, the light-splitting element 7 is disposed on a surface of the second lens 4 close to the display screen 1, and the composite film 8 is disposed on a surface of the third lens 5 close to the display screen 1.

In the optical module provided in the embodiment of present disclosure, the lens group includes a first lens 3, a second lens 4, and a third lens 5, and refractive indices and Abbe numbers of materials used for the three lenses range from $1.4 < n < 1.7$, $20 < v < 75$.

For example, the refractive index of the first lens 3 is $n = 1.54$, and the Abbe number is $v = 56.3$.

For example, the refractive index of the second lens 4 is $n = 1.54$, and the Abbe number is $v = 56.3$.

For example, the refractive index of the third lens 5 is $n = 1.54$, and the Abbe number is $v = 55.7$.

By adjusting the refractive indices and Abbe numbers of the three lenses to match each other, the imaging quality of the optical module may be improved.

A central thickness of the first lens 3 is, for example, in a range of $1mm \leq T_1 \leq 8mm$, the first lens 3 includes two optical surfaces, referring to FIG. 1, namely a first surface 31 and a second surface 32, which are aspheric or planar surfaces. The refractive power $\varphi_1$ of the first lens 3 satisfies: $0 \leq \varphi_1 < 0.01$.

For example, the laminating element 6 is provided on one of the first surface 31 and the second surface 32, an anti-reflection film is attached to the other surface thereof.

A central thickness of the second lens 4 is, for example, in a range of $1mm \leq T_2 \leq 8mm$, the second lens 4 includes two optical surfaces, referring to FIG. 1, namely a third surface 41 and a fourth surface 42, which are aspheric or planar surfaces. The refractive power $\varphi_2$ of the second lens 4 satisfies: $0 < \varphi_2 < 0.1$.

**EP 4 722 782 A1**

For example, the light-splitting element 7 (for example, a transflective film) is disposed on the third surface 41, and an anti-reflection film may be disposed on the fourth surface 42.

A central thickness of the third lens 5 is, for example, in a range of 1mm $\leq T_3 \leq$ 8mm, the third lens 5 includes two optical surfaces, referring to FIG. 1, namely a fifth surface 51 and a sixth surface 52, which are aspheric or planar surfaces. The refractive power $\varphi_2$ of the third lens 5 satisfies: $0 < \varphi_3 < 0.1$.

For example, referring to FIG. 1 and FIG. 3, the composite film 8 may be disposed on the fifth surface 51, and the composite film 8 includes, for example, a first anti-reflection film 80, a first phase retarder 81 (for example, a 1/4 wave plate), a polarizing reflection element 82 (for example, a polarizing reflection film, which can transmit P light and reflect S light), and a first polarization element 83 (for example, a polarization film, which can transmit P light). An anti-reflection film may be provided on the sixth surface 52. The first polarization element 83 can reduce stray light.

According to the optical module provided in the embodiment of present disclosure, referring to FIG. 1, propagation of light is as follows:

The display screen 1 emits natural light, which remains the natural light after passing through the second phase retarder 61 on the surface of the first lens 3, becomes linearly polarized light after passing through the second polarization element 62, becomes circularly polarized light after passing through the third phase retarder 63, is transmitted through the second lens 4, becomes linearly polarized light (S light) after passing through the first phase retarder 81 on the surface of the third lens 5, is reflected by the polarizing reflection element 82, becomes circularly polarized light after passing through the first phase retarder 81 again, is reflected by the light-splitting element 7, becomes linearly polarized light (P light) after passing through the first phase retarder 81, is transmitted through the third lens 5, enters the human eye 01, and finally presents an image in the human eye 01.

In some examples of the present disclosure, an effective focal length of the optical module is F, a center thickness of the first lens 3 is $T_1$, and the optical module satisfies $0 < (F-T_1)/D1 \leq 1.5$.

According to the condition satisfied by the optical module in the above example, the system total length (axial size) of the optical module can be reduced on the premise that the display screen has a certain size. It is beneficial to realize the lightening and thinning of the optical module.

According to some examples of present disclosure, an effective focal length EFL of the optical module satisfies: 15mm $\leq EFL \leq$ 30mm.

According to some examples of present disclosure, a field of view (FOV) of the optical module is no less than 95°.

The following describes in detail optical performance of the optical module provided in the embodiments of present disclosure by using Embodiment 1 to Embodiment 3.

Embodiment 1

Referring to FIG. 1, an optical architecture of the optical module provided in Embodiment 1 includes a first lens 3, a second lens 4, and a third lens 5 that are sequentially disposed along an optical axis, and further includes a display screen 1, the display screen 1 is disposed on a side of the first lens 3 that is away from the second lens 4; an outer diameter D3 of the first lens 3, an outer diameter D4 of the second lens 4, and an aperture D1 of a light-emitting surface of the display screen 1 satisfy: $1 \leq (D1+ D4)/D3 \leq 3$.

The optical module further includes a light-splitting element 7, a composite film 8, and a laminating element 6. The laminating element 6 is disposed on a second surface 32 of the first lens 3, the light-splitting element 7 is disposed on a third surface 41 of the second lens 4, and the composite film 8 is disposed on a fifth surface 51 of the third lens 5.

The laminating element 6 includes a second phase retarder 61, a second polarization element 62, and a third phase retarder 63 that are stacked. The second polarization element 62 is located between the second phase retarder 61 and the third phase retarder 63.

The composite film 8 includes a first phase retarder 81, the polarizing reflection element 82, and the first polarization element 83 that are stacked. The polarizing reflection element 82 is located between the first phase retarder 81 and the first polarization element 83.

Table 1 shows specific optical parameters of each lens in the optical module provided in Embodiment 1.

Table 1

| Surface | Radius (mm) | Thickness (m m) | Materials | Conic | A2 | A4 | A6 | A8 | A10 | A12 |
|---|---|---|---|---|---|---|---|---|---|---|
| 52 | 72.5147 | 3.2433 | K26R | 8.4324 | 0.0000 | 1.098E-05 | 2.476E-08 | 6.783E-11 | 9.417E-14 | 2.72E-19 |
| 51 | Infinity | 0.3000 | Air | 0.0000 | 0.0000 | 0.000E+00 | 0.000E+00 | 0.000E+00 | 0.000E+00 | 0.000E+00 |

(continued)

| Surface | Radius (mm) | Thickness (mm) | Materials | Conic | A2 | A4 | A6 | A8 | A10 | A12 |
|---|---|---|---|---|---|---|---|---|---|---|
| 42 | 190.0834 | 7.0015 | APEL | 9.7375 | 0.0000 | 4.767E-06 | 3.610E-09 | 1.462E-11 | 2.035E-14 | 1.342E-17 |
| 41 | -78.2898 | 1.2928 | Air | 0.0380 | 0.0000 | 9.770E-07 | 2.099E-10 | 4.193E-12 | 2.267E-14 | 1.948E-17 |
| 32 | Infinity | 6.5000 | APEL | 0.0000 | 0.0000 | 0.000E+00 | 0.000E+00 | 0.000E+00 | 0.000E+00 | 0.000E+00 |
| 31 | 593.0123 | 1.0001 | Air | 9.7504 | 0.0000 | 7.724E-05 | 4.207E-07 | 7.755E-10 | 1.285E-12 | 5.849E-15 |

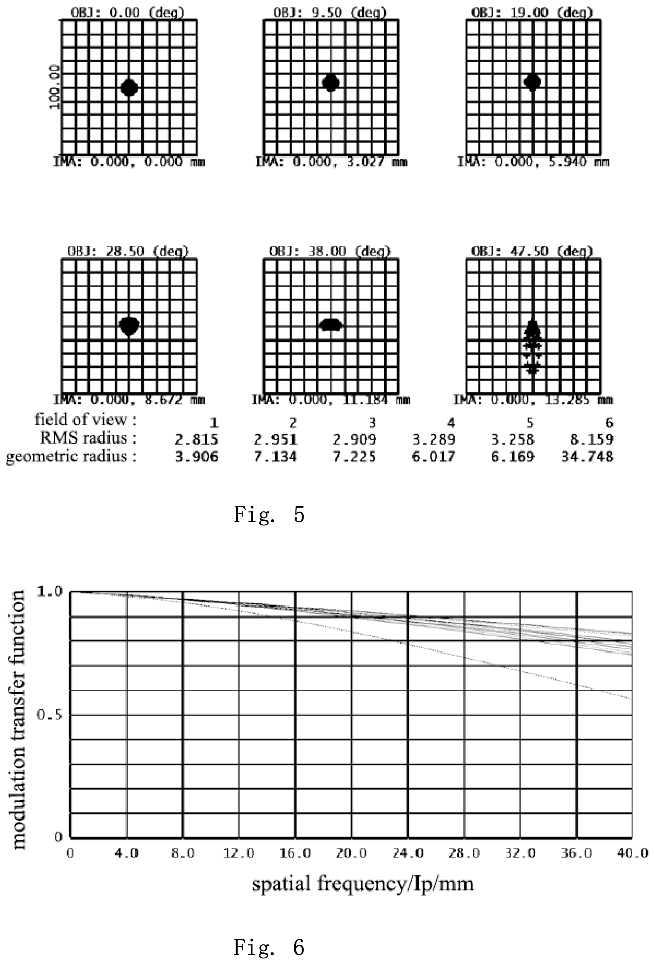

For the optical module provided in Embodiment 1, optical performance thereof may be shown in FIG. 5 to FIG. 8.

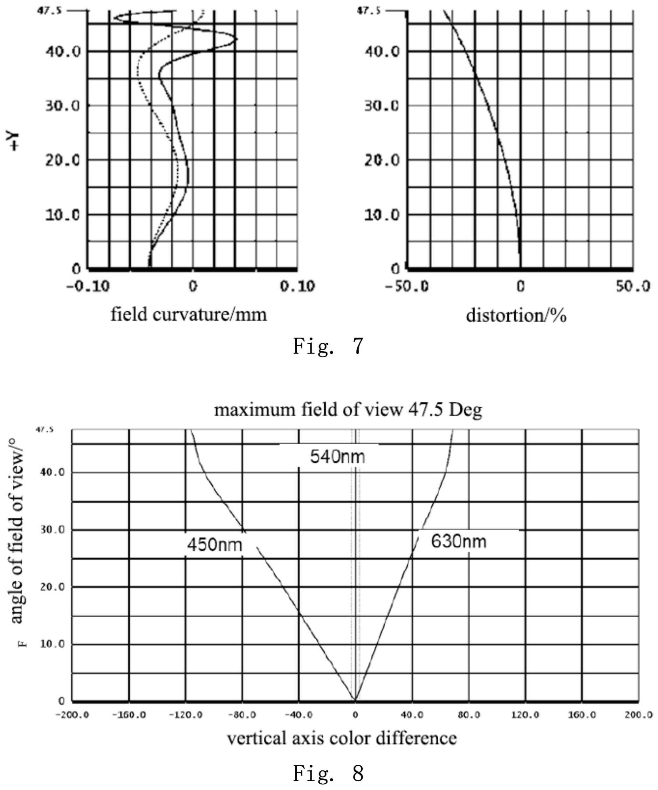

FIG. 5 is a schematic diagram of a spot diagram of the optical module, FIG. 6 is an MTF curve diagram of the optical module, FIG. 7 is a field curvature distortion diagram of the optical module, and FIG. 8 is a vertical chromatic aberration diagram of the optical module.

The dot diagram refers to that after many rays emitted from a point pass through the optical module, the intersection points of the rays and the image plane are no longer concentrated at the same point due to aberrations, and a diffusion pattern distributed in a certain range is formed, which can be used to evaluate the imaging quality of the optical module. Referring to FIG. 5, the maximum value of the image points in the spot diagram is less than 21μm.

The MTF curve graph is a modulation transfer function graph, and the imaging clarity of the optical module is characterized by the contrast of black and white line pairs. Referring to FIG. 6, the central MTF is > 0.15 at 40lp/mm, and the imaging is clear.

Referring to FIG. 7, the maximum distortion occurs in field of view 1, with an absolute value less than 40%.

The vertical chromatic aberration is also referred to as a magnification chromatic aberration, and mainly refers to a difference between focal positions of blue light and red light among a plurality of rays on an image plane, and a polychromatic chief ray on an object side changes to the plurality of rays when exiting on an image side due to dispersion of a refraction system. Referring to FIG. 8, the maximum chromatic aberration value of the optical module is less than 200μm.

Embodiment 2

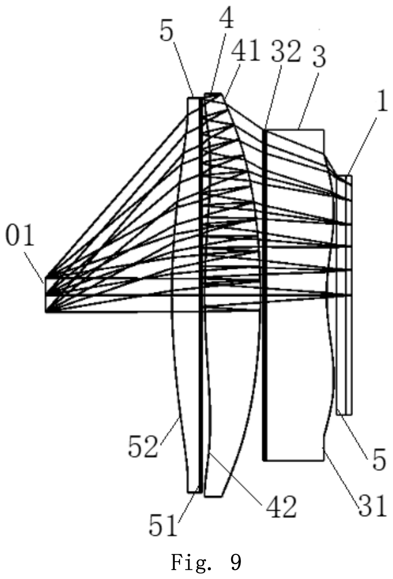

Referring to FIG. 9, the optical architecture of Embodiment 2 is the same as that of Embodiment 1, except that the optical parameters of each lens in the optical module are different, as shown in Table 2 below.

Table 2

| Surface | Radius (mm) | Thickness (mm) | Materials | Conic | A2 | A4 | A6 | A8 | A10 | A12 |
|---|---|---|---|---|---|---|---|---|---|---|
| 52 | 78.4338 | 3.2858 | K26R | -3.2980 | 0.0000 | 1.365E-05 | 6.710E-08 | 1.576E-10 | 3.246E-14 | 4.358E-16 |
| 51 | Infinity | 0.3200 | Air | 0.0000 | 0.0000 | 0.000E+00 | 0.000E+00 | 0.000E+00 | 0.000E+00 | 0.000E+00 |
| 42 | 87.8179 | 6.6000 | APEL | -4.7639 | 0.0000 | 1.100E-05 | 4.468E-09 | 3.456E-12 | 2.657E-14 | 3.449E-18 |
| 41 | -85.7913 | 2.3000 | Air | -0.0305 | 0.0126 | 3.947E-06 | 1.641E-09 | 8.458E-12 | 2.891E-14 | 3.628E-17 |
| 32 | Infinity | 7.2000 | APEL | 0.0000 | 0.0000 | 0.000E+00 | 0.000E+00 | 0.000E+00 | 0.000E+00 | 0.000E+00 |
| 31 | 24.4273 | 1.2000 | Air | 0.0000 | 0.0000 | 8.368E-05 | 8.406E-08 | 1.769E-10 | 4.228E-13 | -1.902E-15 |

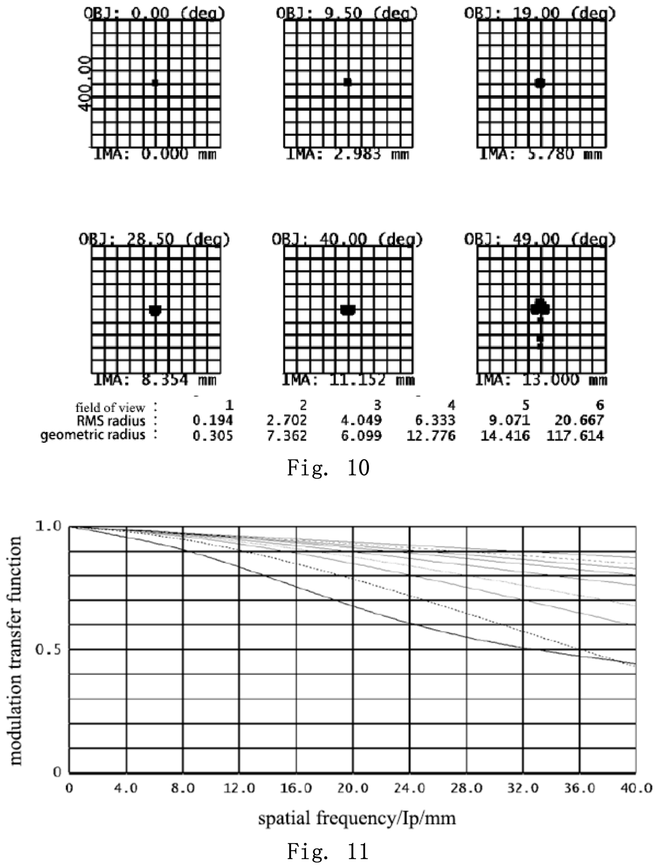

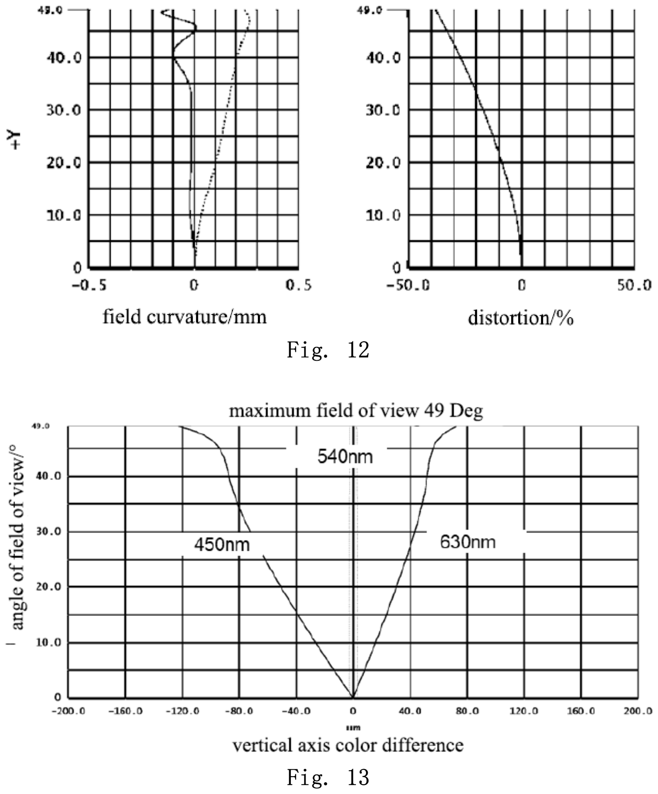

For the optical module provided in Embodiment 2, optical performance thereof may be shown in FIG. 10 to FIG. 13. FIG. 10 is a schematic diagram of a spot diagram of the optical module, FIG. 11 is an MTF curve diagram of the optical module, FIG. 12 is a field curvature distortion diagram of the optical module, and FIG. 13 is a vertical chromatic aberration diagram of the optical module.

The dot diagram refers to that after many rays emitted from a point pass through the optical module, the intersection points of the rays and the image plane are no longer concentrated at the same point due to aberrations, and a diffusion pattern distributed in a certain range is formed, which can be used to evaluate the imaging quality of the optical module. Referring to FIG. 10, the maximum value of the image points in the spot diagram is less than 21μm.

The MTF curve graph is a modulation transfer function graph, and the imaging clarity of the optical module is characterized by the contrast of black and white line pairs. Referring to FIG. 11, the central MTF is > 0.15 at 401p/mm, and the imaging is clear.

Referring to FIG. 12, the maximum distortion occurs in field of view 1, with an absolute value less than 40%.

The vertical chromatic aberration is also referred to as a magnification chromatic aberration, and mainly refers to a difference between focal positions of blue light and red light among a plurality of rays on an image plane, and a polychromatic chief ray on an object side changes to the plurality of rays when exiting on an image side due to dispersion of a refraction system. Referring to FIG. 13, the maximum chromatic aberration value of the optical module is less than 200μm.

Embodiment 3

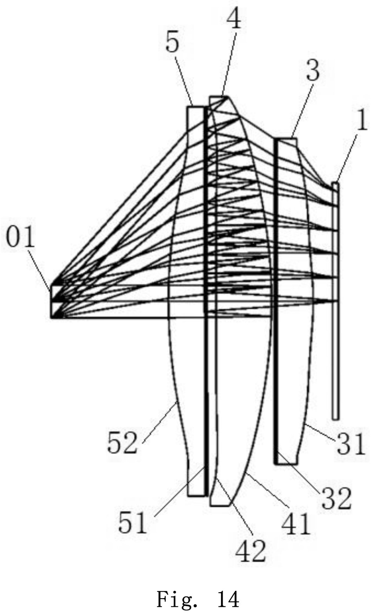

Referring to FIGS. 14, the optical architecture of Embodiment 3 is the same as that of Embodiment 1, except that the optical parameters of each lens in the optical module are different, as shown in Table 3 below.

Table 3

| Surface | Radius (mm) | Thickness (m m) | Materials | Conic | A2 | A4 | A6 | A8 | A10 | A12 |
|---|---|---|---|---|---|---|---|---|---|---|
| 52 | 63.8786 | 4.32 21 | K26R | 3.814 2 | 0.00 00 | 7.478E-06 | 5.279E-08 | 3.419E-10 | 1.057E-12 | 1.748E-15 |
| 51 | Infinity | 1.07 00 | Air | 0.000 0 | 0.00 00 | 0.000E+00 | 0.000E+00 | 0.000E+00 | 0.000E+00 | 0.000E+00 |
| 42 | -504.8567 | 6.60 00 | APEL | 7.493 4 | 0.00 00 | 8.292E-06 | 3.130E-09 | 5.563E-11 | 9.387E-14 | 6.557E-17 |
| 41 | -61.1531 | 0.31 00 | Air | 2.054 0 | 0.01 26 | 3.705E-06 | 4.005E-09 | 1.027E-11 | 3.061E-15 | 4.690E-19 |
| 32 | Infinity | 4.30 00 | APEL | 0.000 0 | 0.00 00 | 0.000E+00 | 0.000E+00 | 0.000E+00 | 0.000E+00 | 0.000E+00 |
| 31 | -31.4994 | 1.20 00 | Air | 4.262 1 | 0.00 00 | 1.875E-04 | 1.439E-06 | 5.236E-09 | 9.515E-12 | 6.862E-15 |

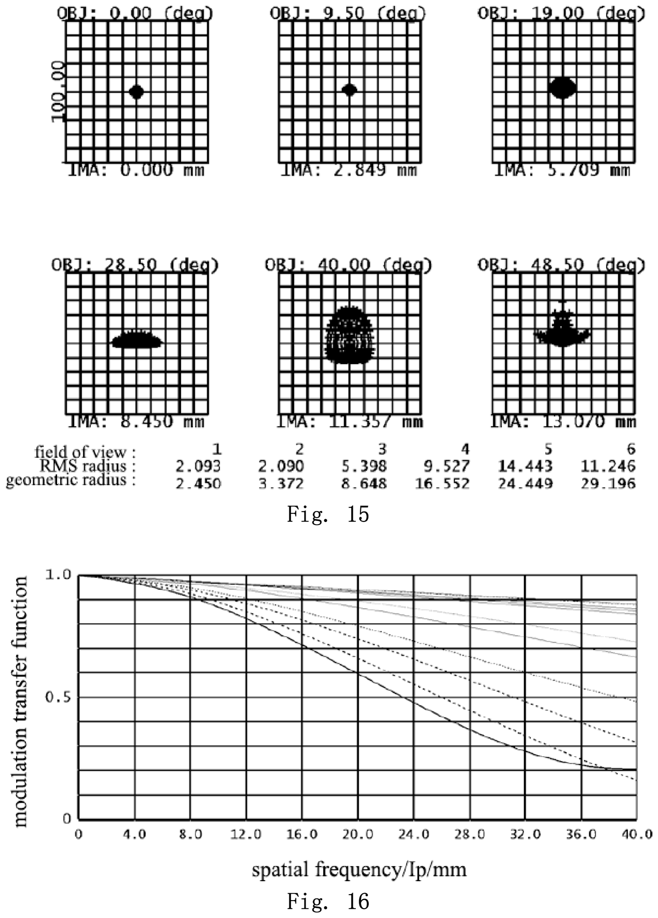

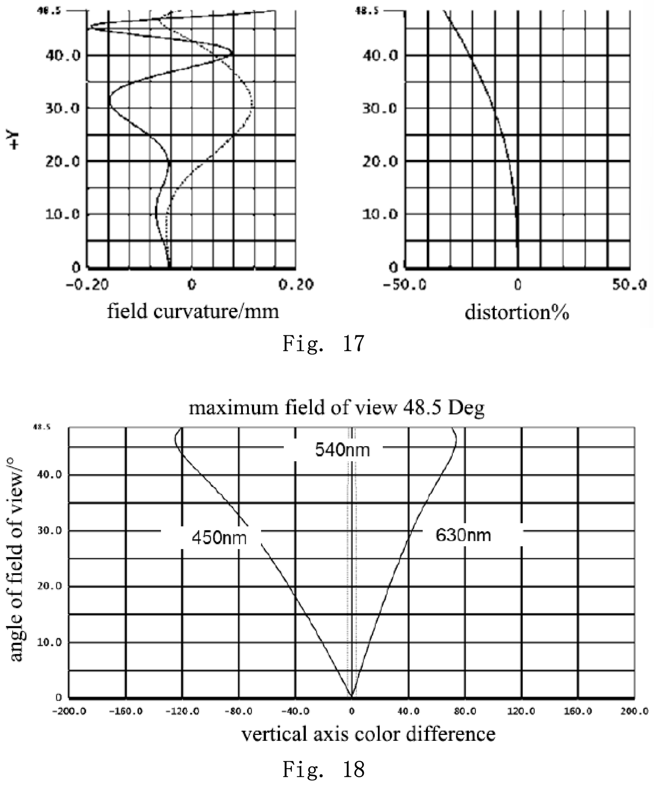

For the optical module provided in Embodiment 3, optical performance thereof may be shown in FIG. 15 to FIG. 18. FIG. 15 is a schematic diagram of a spot diagram of the optical module, FIG. 16 is an MTF curve diagram of the optical module, FIG. 17 is a field curvature distortion diagram of the optical module, and FIG. 18 is a vertical chromatic aberration diagram of the optical module.

The dot diagram refers to that after many rays emitted from a point pass through the optical module, the intersection points of the rays and the image plane are no longer concentrated at the same point due to aberrations, and a diffusion pattern distributed in a certain range is formed, which can be used to evaluate the imaging quality of the optical module. Referring to FIG. 15, the maximum value of the image points in the spot diagram is less than 21μm.

The MTF curve graph is a modulation transfer function graph, and the imaging clarity of the optical module is characterized by the contrast of black and white line pairs. Referring to FIG. 16, the central MTF is > 0.15 at 401p/mm, and the imaging is clear.

Referring to FIG. 17, the maximum distortion occurs in field of view 1, with an absolute value less than 40%.

The vertical chromatic aberration is also referred to as a magnification chromatic aberration, and mainly refers to a difference between focal positions of blue light and red light among a plurality of rays on an image plane, and a polychromatic chief ray on an object side changes to the plurality of rays when exiting on an image side due to dispersion of a refraction system. Referring to FIG. 18, the maximum chromatic aberration value of the optical module is less than 200μm.

According to another embodiment of the present application, a head-mounted display device is provided. The head-mounted display device includes a housing and the optical module as described above.

The head-mounted display device includes VR smart glasses or a VR smart helmet, which is not limited in the embodiments of the present disclosure.

The specific implementation of the head-mounted display device of the embodiment of the present application can refer to the above embodiments of the optical module, and therefore has at least all the beneficial effects brought by the technical solutions of the above embodiments, which will not be repeated here.

The above embodiments focus on the differences between the embodiments, and the different optimization features between the embodiments can be combined to form a better embodiment as long as they are not contradictory, which will not be repeated here in view of the brevity of the text.

Although some specific embodiments of the present application have been described in detail through examples, those skilled in the art should understand that the above examples are only for illustration, and are not intended to limit the scope of the present application. Those skilled in the art should understand that the above embodiments may be modified without departing from the scope and spirit of the present application. The scope of the present application is defined by the appended claims.

**Claims**

1. An optical module, comprising a lens group and a light-splitting element (7), a first phase retarder (81) and a polarizing reflection element (82) arranged in an optical path of the lens group, wherein the first phase retarder (81) is located between the light-splitting element (7) and the polarizing reflection element (82);

   wherein the optical module further comprises a display screen (1), and the display screen (1) is located on a side of the lens group;
   wherein the lens group comprises a first lens (3) and a second lens (4), the first lens (3) is close to the display screen (1), and the second lens (4) is located on a side of the first lens (3) away from the display screen (1); and
   wherein an outer diameter D3 of the first lens (3), an outer diameter D4 of the second lens (4) and an aperture D1 of a light-emitting surface of the display screen (1) satisfy: $1 \leq (D1+D4)/D3 \leq 3$.

2. The optical module of claim 1, wherein the lens group further comprises a third lens (5), the third lens (5) is located on a side of the second lens (4) away from the display screen (1), and the first lens (3), the second lens (4) and the third lens (5) are located on an optical axis, and refractive powers of the first lens (3), the second lens (4) and the third lens (5) are positive.

3. The optical module of claim 2, wherein a distance between a surface of the third lens (5) close to the display screen (1) and a light-emitting surface of the display screen (1) is L, a distance between the surface of the third lens (5) close to the display screen (1) and a surface of the first lens (3) away from the display screen (1) is L1, and the optical module satisfies:

$$-500 \leq D1*L1-D3*L < 0.$$

4. The optical module of claim 2, wherein a refractive power of the optical module is $\varphi$, a refractive power of the second lens (4) is $\varphi_2$, and the optical module satisfies:

$$0 < D1*\varphi-D4*\varphi_2 \leq 2.$$

5. The optical module of claim 2, wherein a refractive power $\varphi_1$ of the first lens (3) satisfies: $0 \leq \varphi_1 < 0.01$;

   the refractive power $\varphi_2$ of the second lens (4) satisfies: $0 < \varphi_2 < 0.1$; and
   a refractive power $\varphi_3$ of the third lens (5) satisfies: $0 < \varphi_3 < 0.1$.

6. The optical module of claim 2, wherein a combined refractive power $\varphi_4$ of the second lens (4) and the third lens (5) satisfies $0.03 \leq \varphi_4 \leq 0.07$.

7. The optical module of claim 2, wherein a combined refractive power $\varphi_5$ of the first lens (3), the second lens (4) and the third lens (5) satisfies $0.02 \leq \varphi_5 \leq 0.08$.

8. The optical module of any one of claims 2-7, wherein the optical module further comprises a first polarization element (83), and the first phase retarder (81), the polarizing reflection element (82) and the first polarization element (83) are sequentially stacked to form a composite film(8); and

   wherein the light-splitting element (7) is disposed on the second lens (4), and the composite film(8) is disposed on the third lens (5).

9. The optical module of claim 8, wherein the display screen (1) is configured to emit a circularly polarized light or a natural light; and

   when a light emitted by the display screen (1) is the natural light, a laminating element (6) is disposed on either side of the first lens (3) to convert the natural light into circularly polarized light, wherein the laminating element (6) comprises a second phase retarder (61), a second polarization element (62) and a third phase retarder (63) that are stacked, and wherein the second polarization element (62) is located between the second phase retarder (61) and the third phase retarder (63).

10. The optical module of claim 9, wherein the laminating element (6) is disposed on a surface of the first lens (3) away from the display screen (1), the light-splitting element (7) is disposed on a surface of the second lens (4) close to the display screen (1), and the composite film (8) is disposed on a surface of the third lens (5) close to the display screen (1).

11. The optical module of claim 1, wherein an effective focal length of the optical module is F, a center thickness of the first lens (3) is $T_1$, and the optical module satisfies:

$$0 < (F-T_1)/D1 \leq 1.5.$$

12. The optical module of claim 1, wherein an effective focal length F of the optical module satisfies: 15mm $\leq$ F $\leq$ 30mm.

13. The optical module of claim 1, wherein a field of view (FOV) of the optical module is no less than 95°.

14. A head-mounted display device, comprising:

   a housing; and
   the optical module of any one of claims 1-13.

Fig. 1

Fig. 2

Fig. 3

Fig. 4

| field of view : | 1 | 2 | 3 | 4 | 5 | 6 |
|---|---|---|---|---|---|---|
| RMS radius : | 2.815 | 2.951 | 2.909 | 3.289 | 3.258 | 8.159 |
| geometric radius : | 3.906 | 7.134 | 7.225 | 6.017 | 6.169 | 34.748 |

Fig. 5

Fig. 6

Fig. 7

Fig. 8

Fig. 9

OBJ: 0.00 (deg)    OBJ: 9.50 (deg)    OBJ: 19.00 (deg)

400.00

IMA: 0.000 mm    IMA: 2.983 mm    IMA: 5.780 mm

OBJ: 28.50 (deg)    OBJ: 40.00 (deg)    OBJ: 49.00 (deg)

IMA: 8.354 mm    IMA: 11.152 mm    IMA: 13.000 mm

| field of view : | 1 | 2 | 3 | 4 | 5 | 6 |
|---|---|---|---|---|---|---|
| RMS radius : | 0.194 | 2.702 | 4.049 | 6.333 | 9.071 | 20.667 |
| geometric radius : | 0.305 | 7.362 | 6.099 | 12.776 | 14.416 | 117.614 |

Fig. 10

Fig. 11

field curvature/mm         distortion/%

Fig. 12

maximum field of view 49 Deg

vertical axis color difference

Fig. 13

Fig. 14

| field of view : | 1 | 2 | 3 | 4 | 5 | 6 |
|---|---|---|---|---|---|---|
| RMS radius : | 2.093 | 2.090 | 5.398 | 9.527 | 14.443 | 11.246 |
| geometric radius : | 2.450 | 3.372 | 8.648 | 16.552 | 24.449 | 29.196 |

Fig. 15

spatial frequency/lp/mm

Fig. 16

field curvature/mm          distortion%

Fig. 17

maximum field of view 48.5 Deg

vertical axis color difference

Fig. 18

## INTERNATIONAL SEARCH REPORT

| | International application No. |
|---|---|
| | **PCT/CN2023/127643** |

### A. CLASSIFICATION OF SUBJECT MATTER

G02B13/18(2006.01)i; G02B27/01(2006.01)i

According to International Patent Classification (IPC) or to both national classification and IPC

### B. FIELDS SEARCHED

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNABS, CNTXT: 透镜, 镜片, 镜头, 光学系统, 偏光, 偏振, 半反, 半透, 分光, 反光, 反射, 折叠, 头戴, 头带, 虚拟显示, 增强显示, 口径, 外径; VEN, EPTXT, WOTXT, USTXT: diameter, radius, split, half, reflect, lens, optical system, polarize, virtual, augmented, display

### C. DOCUMENTS CONSIDERED TO BE RELEVANT

| Category* | Citation of document, with indication, where appropriate, of the relevant passages | Relevant to claim No. |
|---|---|---|
| PX | CN 116719154 A (GOERTEK OPTICAL TECHNOLOGY (QINGDAO) CO., LTD.) 08 September 2023 (2023-09-08) claims 1-14, description, paragraphs 3-161, and figures 1-18 | 1-14 |
| X | CN 218383492 U (GOERTEK OPTICAL TECHNOLOGY CO., LTD.) 24 January 2023 (2023-01-24) description, paragraphs 4-211, figure 3, and table 3 | 1-14 |
| X | CN 114859560 A (GOERTEK OPTICAL TECHNOLOGY CO., LTD.) 05 August 2022 (2022-08-05) description, paragraphs 4-182, and figures 1-21 | 1-14 |
| A | US 2020195912 A1 (SHARP K.K.) 18 June 2020 (2020-06-18) entire document | 1-14 |

☐ Further documents are listed in the continuation of Box C.　　☑ See patent family annex.

| | |
|---|---|
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | "&"　document member of the same patent family |
| "P"　document published prior to the international filing date but later than the priority date claimed | |

| Date of the actual completion of the international search | Date of mailing of the international search report |
|---|---|
| **24 January 2024** | **01 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/127643**

| Patent document cited in search report | | | Publication date (day/month/year) | Patent family member(s) | | | Publication date (day/month/year) |
|---|---|---|---|---|---|---|---|
| CN | 116719154 | A | 08 September 2023 | None | | | |
| CN | 218383492 | U | 24 January 2023 | None | | | |
| CN | 114859560 | A | 05 August 2022 | CN | 114859560 | B | 12 September 2023 |
| US | 2020195912 | A1 | 18 June 2020 | US | 10725303 | B2 | 28 July 2020 |

Form PCT/ISA/210 (patent family annex) (July 2022)